# EUROPEAN PATENT APPLICATION

(11) **EP 2 730 454 A2**
(43) Date of publication of application: **14.05.2014**
(21) Application number: 13190041.7
(22) Date of filing: 24.10.2013
(51) Int. Cl.: B60L 11/18

(54) **Vehicle environment monitoring apparatus**

(30) Priority: 08.11.2012 JP 2012246453
(71) Applicant: Honda Motor Co., Ltd., Tokyo 107-8556 (JP)
(72) Inventor: Aoki, Koji, Saitama, 351-0193 (JP); Ishida, Yoshimitsu, Saitama, 351-0193 (JP)
(74) Representative: Prechtel, Jörg

(57) **Abstract**

A vehicle environment monitoring apparatus mounted on a vehicle which is provided with a battery system and at least one onboard camera for obtaining an image of environment of the vehicle. The battery system includes an onboard battery and a charging connector, and is configured so that the onboard battery is capable of being charged via the charging connector from external charging equipment. An image of environment of the external charging equipment and/or an image of environment of the charging connector are/is obtained with the onboard camera(s), when the onboard battery is being charged from the external charging equipment. At least one of a transmitting process for transmitting the obtained image to an external apparatus, and a storing process for storing the obtained image in an onboard storing device, is performed.

## Description

### BACKGROUND OF THE INVENTION

### Field of the Invention

The present invention relates to a vehicle environment monitoring apparatus, and particularly to an environment monitoring apparatus for a vehicle provided with a battery system which is capable of being charged from external charging equipment and/or supplying electric power to an external electric device.

### Description of the Related Art

Japanese Patent Laid-open Publication No. 2002-370620 (JP'620) discloses a vehicle interior monitoring system for antitheft in which an image of the interior of the vehicle is obtained by a rearview monitoring camera mounted on the vehicle, and the obtained image can be monitored outside the vehicle. According to this system, the image of the interior is obtained by changing a viewing direction of the rearview monitoring camera, and the obtained image is transmitted via wireless communication to an external mobile display device, which displays the transmitted image.

In recent years, a vehicle, such as an electric vehicle or a hybrid vehicle, which is provided with a battery system capable of being charged from external charging equipment and supplying electric power to an external electric device, is used. When performing the battery charging or the electric power supply with respect to such vehicle, monitoring the environment around the vehicle is required rather than monitoring the interior of the vehicle, since the time period during which no person exists in the vicinity of the vehicle becomes long. The system shown in JP'620 cannot satisfy such requirement.

### SUMMARY OF THE INVENTION

The present invention was made contemplating the above described point, and an objective of the present invention is provide a vehicle environment monitoring apparatus which monitors environment of a vehicle provided with a battery system which is capable of being charged from external charging equipment and/or supplying electric power to an external electric device, thereby making it possible to prevent unauthorized use of the external charging equipment or the electric power supply function of the vehicle.

To attain the above objective, the present invention provides a vehicle environment monitoring apparatus mounted on a vehicle which is provided with a battery system and at least one onboard camera (6) for obtaining an image of environment of the vehicle. The battery system includes an onboard battery (2, 3) and a charging connector (4), and is configured so that the onboard battery (2, 3) is capable of being charged via the charging connector (4) from external charging equipment (21). The vehicle environment monitoring apparatus is characterized by comprising image obtaining means and transmitting/storing process means. The image obtaining means obtains, with the at least one onboard camera (6), an image of environment of the external charging equipment (21) and/or an image of environment of the charging connector (4), when the onboard battery (2, 3) is being charged from the external charging equipment (21). The transmitting/storing process means performs at least one of a transmitting process for transmitting the obtained image to an external apparatus (11, 12), and a storing process for storing the obtained image in an onboard storing device (10).

With this configuration, when the onboard battery is being charged from the external charging equipment, an image of environment of the external charging equipment and/or an image of environment of the charging connector, are/is obtained with the onboard camera(s). Further, the transmitting process for transmitting the obtained image to the external apparatus, and/or the storing process for storing the obtained image in the onboard storing device are/is performed. Accordingly, it is possible to monitor the environment of the external charging equipment and/or the environment of the charging connector using the onboard camera(s), thereby obtaining an effect of preventing unauthorized use of the external charging equipment.

Preferably, the at least one onboard camera (6) is mounted so that the viewing direction thereof can be changed, and the image obtaining means moves the at least one onboard camera (6) so that the viewing direction thereof is directed to the external charging equipment (21) and/or the charging connector (4), when charging the onboard battery (2, 3) from the external charging equipment (21).

With this configuration, the onboard camera(s) is moved so that the viewing direction thereof is directed to the external charging equipment and/or the charging connector, when charging the onboard battery from the external charging equipment. Accordingly, the image of environment of the monitoring object is surely obtained, which makes it possible to appropriately perform the monitoring.

Preferably, the vehicle is provided with a plurality of onboard cameras (6a, 6b), and the transmitting/storing means performs at least one of the transmitting process and the storing process with respect to the images respectively obtained by the plurality of onboard cameras (6a, 6b).

With this configuration, the transmitting process and/or the storing process are/is performed with respect to the images obtained respectively by the plurality of onboard cameras, which enables to perform the monitoring from a plurality of viewing directions.

Preferably, the image obtaining means obtains an image of environment of the vehicle using electric power supplied from the onboard battery (2, 3), when the vehicle is stopped and the external charging equipment (21) is not connected to the charging connector (4), and the transmitting/storing means performs at least one of the transmitting process and the storing process with respect to the obtained image.

With this configuration, the image of environment of the vehicle is obtained using electric power supplied from the onboard battery, when the vehicle is stopped and the external charging equipment is not connected to the charging connector. Further, the transmitting process and/or the storing process are/is performed with respect to the obtained image. Accordingly, it is possible to monitor the environment of the vehicle even when charging of the onboard battery is not performed.

Preferably, the vehicle environment monitoring apparatus further comprises remote control means for receiving a remote operation signal from an information terminal device (12) and performing a control operation based on the remote operation signal. The remote control means controls the transmitting/storing process means based on the remote operation signal to transmit the image obtained by the at least one onboard camera (6) to the information terminal device (12).

With this configuration, the remote operation signal from the information terminal device is received and the image obtained by the onboard camera(s) is transmitted to the information terminal device based on the remote operation signal. Accordingly, when the user of the vehicle has an information terminal device such as a smart phone, the obtained image can be checked with the smart phone, which further enhances convenience of the user.

Preferably, the vehicle environment monitoring apparatus further comprises abnormality determining means and alert information outputting means. The abnormality determining means determining whether any abnormality occurs based on the image obtained by the at least one onboard camera (6). The alert information outputting means outputs alert information when the abnormality determining means determines that abnormality has occurred.

With this configuration, it is determined based on the image obtained by onboard camera(s) whether any abnormality occurs, and the alert information is output when abnormality is determined to have occurred. Accordingly, it is possible to promptly cope with abnormality such as unauthorized use of the external charging equipment.

To attain the above objective, the present invention provides another vehicle environment monitoring apparatus mounted on a vehicle which is provided with a battery system including an onboard battery (2, 3) and an electric power supply connector (5). The onboard battery system is configured so as to be capable of supplying electric power via the electric power supply connector (5) to an external electric device. The vehicle environment monitoring apparatus includes at least one onboard camera (6) for obtaining an image of environment of the vehicle, and is characterized by further comprising image obtaining means and transmitting/storing process means. The image obtaining means obtains an image of environment of the electric power supply connector (5) when the vehicle is stopped. The transmitting/storing process means performs at least one of a transmitting process for transmitting the obtained image to an external apparatus (11, 12), and a storing process for storing the obtained image in an onboard storing device (10).

With this configuration, an image of environment of the electric power supply connector is obtained by the onboard camera(s) when the vehicle is stopped, and the transmitting process for transmitting the obtained image to an external apparatus and/or the storing process for storing the obtained image in the onboard storing device are/is performed. Accordingly, it is possible to monitor the environment of the electric power supply connector using the onboard camera(s), thereby obtaining an effect of preventing unauthorized use of the electric power supply function of the vehicle.

### BRIEF DESCRIPTION OF THE DRAWINGS

FIG. 1 shows a configuration of a battery system and a vehicle environment monitoring apparatus mounted on a vehicle according to one embodiment of the present invention (first embodiment);

FIG. 2 is a flowchart of a vehicle environment monitoring control (first embodiment);

FIG. 3 shows a configuration of a battery system and a vehicle environment monitoring apparatus according to a second embodiment of the present invention; and

FIG. 4 is a flowchart of a vehicle environment monitoring control (second embodiment).

### DETAILED DESCRIPTION OF THE PREFERRED EMBODIMENTS

Preferred embodiments of the present invention will now be described with reference to the drawings.

### First Embodiment

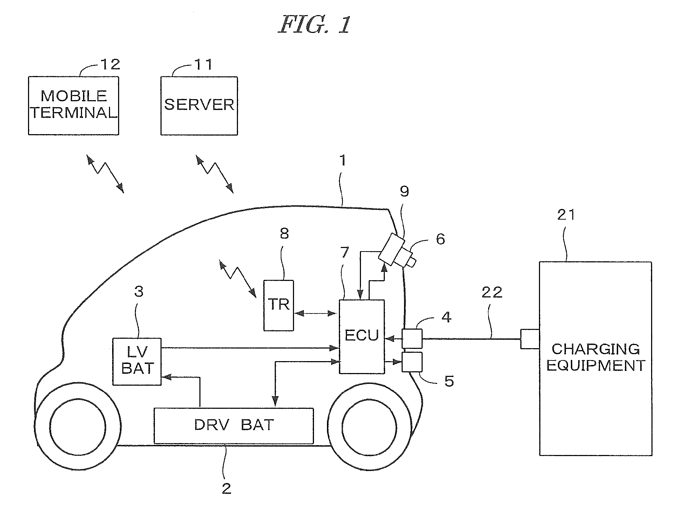

FIG. 1 shows a configuration of a battery system and a vehicle environment monitoring apparatus mounted on a vehicle according to one embodiment of the present invention. The vehicle 1 is a small electric vehicle provided with a drive battery 2 of a comparatively high output voltage, a low voltage battery 3 of a comparatively low output voltage (e.g., about 12V), a charging connector 4, an electric power supply connector 5, a camera 6, an electronic control unit (hereinafter referred to as "ECU") 7, and a communication unit 8. The low voltage battery 3 is used as a power source for the control system and the like of the vehicle 1. The charging connector 4 is configured so as to be connectable to a charging cable 22 of external charging equipment 21. The electric power supply connector 5 is mounted for supplying electric power from the drive battery 2 to an external electric device. The camera 6 is mounted for obtaining a rear view image of the vehicle. The ECU 7 performs a charging/discharging control of the batteries 2 and 3, and a vehicle environment monitoring control using the camera 6. The communication unit 8 is provided for the ECU 7 to transmit the image obtained by the camera 6 to an external monitoring server 11 or a mobile terminal device 12.

The camera 6 is mounted so that the viewing direction of the camera 6 can be changed with an actuator 9, and the actuator 9 is driven and controlled by the ECU 7. The image obtained by the camera 6 can be displayed with an onboard display device (not shown) arranged in front of the driver's seat. The charging connector 4 and the electric power supply connector 5 are disposed on the rear portion of the vehicle 1, and an image of environment around the connectors 4 and 5 can be obtained by the camera 6. The communication unit 8 performs the communication based on the 3G (3rd Generation) standard or the LTE (Long Term Evolution) standard to and from the monitoring server 11, and performs the communication based on 3G standard, LTE standard, or Wi-Fi (IEEE H802.11 a/b/g/n) standard to and from the mobile terminal device 12.

In this embodiment, the environment monitoring apparatus is constituted with the camera 6, the ECU 7, the communication unit 8, and the actuator 9. The battery system is constituted with the batteries 2 and 3, the ECU 7, and the connectors 4 and 5.

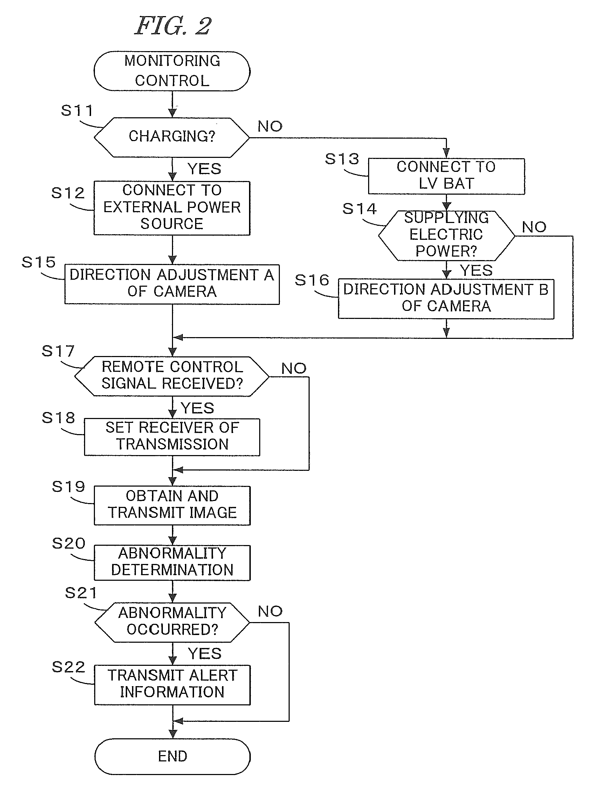

FIG. 2 is a flowchart of an environment monitoring control process, and this process is executed at predetermined time intervals in the ECU 7, when the vehicle 1 is stopped.

In step S11, it is determined whether or not charging of the batteries 2 and 3 is performed with electric power supply from the charging equipment 21. If the answer to step S11 is affirmative (YES), the power source input of the environment monitoring apparatus is connected to the external power source (step S12). That is, the environment monitoring apparatus is operated with the electric power from the charging equipment 21. In the normal operating condition, electric power for the environment monitoring apparatus is supplied from the low voltage battery 3. Accordingly, the power source input is switched to the external power source when charging the batteries 2 and 3.

In step S15, direction adjustment A of the camera 6 is performed according to the user's instruction. Normally, the direction adjustment A becomes unnecessary by stopping the vehicle 1 near the charging equipment 21 with viewing the backward image (rearview image) obtained by the camera 6. However, if the vehicle has not stopped at such position, the viewing angle θ is changed from a normal backward viewing angle θ B to a charging equipment viewing angle θ CH for obtaining an image of the viewing direction to the charging equipment 21 (the angle θ CH is maintained after the adjustment). Thereafter, the process proceeds to step S17. It is to be noted that the charging equipment viewing angle θ CH may previously be set if the charging equipment 21 normally used is fixed.

If the answer to step S11 is negative (NO), i.e., the charging is not performed, the process proceeds to step S13, in which the connection of the power source input of the environment monitoring apparatus and the low-voltage battery 3 is maintained (the power source input of the environment monitoring apparatus is switched to the low-voltage battery 3 immediately after completion of the charging). In step S14, it is determined whether or not electric power supply to the external device (for example, an electric device in vehicle owner's house) through the electric power supply connector 5 is performed. If the answer to step S14 is negative (NO), the process immediately proceeds to step S17. Accordingly, the viewing angle θ of the camera 6 is maintained at the normal backward viewing angle θ B.

If the answer to step S14 is affirmative (YES), i.e., when performing electric power supply to the external device, direction adjustment B of the camera 6 is performed (step S16). That is, if required, the viewing angle θ of the camera 6 is changed from the backward viewing angle θ B or the charging equipment viewing angle θ CH to a connector viewing angle θ CN for obtaining an image of environment of the electric power supply connector 5. The connector viewing angle θ CN is an angle previously set based on relationship between a mounted position of the camera 6 and a mounted position of the electric power supply connector 5.

In step S17, it is determined whether or not a remote control signal transmitted from the mobile terminal device 12 is received. The remote control signal is a signal for designating the mobile terminal device 12 as a receiver of the image obtained by the camera 6. If the remote control signal is received, the receiver of the obtained image is set to the mobile terminal device 12 (step S18), and the process proceeds to step S19.

If the answer to step S17 is negative (NO), the process immediately proceeds to step S19. In this case, the obtained image is transmitted to a previously set receiver (the monitoring server 11 in this embodiment).

In step S19, the image is obtained by the camera 6 and at the same time the obtained image is transmitted to the set receiver. In step S20, abnormality determination is performed based on the image obtained by the camera 6. Specifically, it is determined that abnormality has occurred, for example, if a moving object is detected in the image, since no moving object (man or thing) normally exists in a manless state.

In step S21, it is determined whether or not abnormality has occurred. If abnormality is determined to have occurred, the alert information is transmitted to the previously set receiver (step S22). If no abnormality is detected, the process immediately ends.

As described above, in this embodiment, when charging the batteries 2 and 3 from the charging equipment 21, the image of environment of the charging equipment 21 is obtained by the camera 6, and the transmitting process is performed to transmit the obtained image to the monitoring server 11. Accordingly, it is possible to monitor the environment of the charging equipment 21 using the camera 6 for rearview monitoring, thereby obtaining an effect of preventing unauthorized use of the charging equipment 21.

Further, the camera 6 is moved so that the viewing direction thereof is directed to the charging equipment 21 when charging the batteries 2 and 3 from the charging equipment 21. Accordingly, the image of environment of the charging equipment 21 is surely obtained, which makes it possible to appropriately perform the monitoring.

Further, when the vehicle 1 is stopped, and charging from the charging equipment 21 and supplying electric power to the external device are not performed, the image of environment of the vehicle 1 is obtained using electric power supplied from the low voltage battery 3, and the transmitting process is performed with respect to the obtained image. Accordingly, it is possible to monitor the environment of the vehicle 1 even when charging of the batteries 2 and 3 is not performed.

Further, when the remote operation signal from the mobile terminal device 12 is received, the image obtained by the camera 6 is transmitted to the mobile terminal device 12 based on the received remote operation signal. Accordingly, when the user of the vehicle 1 has, for example, a smart phone, the obtained image can be checked with the smart phone, which further enhances convenience of the user.

Further, it is determined based on the image obtained by the camera 6 whether any abnormality occurs, and the alert information is output when abnormality is determined to have occurred. Accordingly, it is possible to promptly cope with abnormality such as unauthorized use of the charging equipment 21.

Further, the image of environment of the electric power supply connector 5 is obtained by the camera 6, and the obtained image is transmitted to the monitoring server 11. Accordingly, it is possible to monitor the environment of the electric power supply connector 5, thereby obtaining an effect of preventing unauthorized use of the electric power supply function of the vehicle 1.

In this embodiment, the mobile terminal device 12 corresponds to the information terminal device, the camera 6 and the actuator 9 constitute a part of the image obtaining means, the communication unit 8 constitutes a part of the transmitting/storing process means, and the ECU 7 constitutes a part of the image obtaining means, a part of the transmitting/storing process means, the remote control means, the abnormality determining means, and the alert information outputting means. Specifically steps S11 - S16 and step S19 correspond to the image obtaining means, step S19 corresponds to the transmitting/storing process means, steps S17 and S18 correspond to the remote control means, step S20 corresponds to the abnormality determining means, and step S21 corresponds to the alert information outputting means.

### Modification

In the above-described embodiment, the image of environment of the charging equipment 21 is obtained by the camera 6. Alternatively, the image of environment of the charging equipment 21 and the image of environment of the charging connector 4 may be obtained by changing the viewing angle θ of the camera 6 at predetermined time intervals, and the obtained image may be transmitted to the designated receiver. Further, only the image of environment of the charging connector 4 may be obtained by the camera 6.

It is to be noted that the charging connector 4 is disposed near the electric power supply connector 5, and the viewing angle θ of the camera 6 upon obtaining the image of environment of the charging connector 4 is set to the connector viewing angle θ CN.

### Second Embodiment

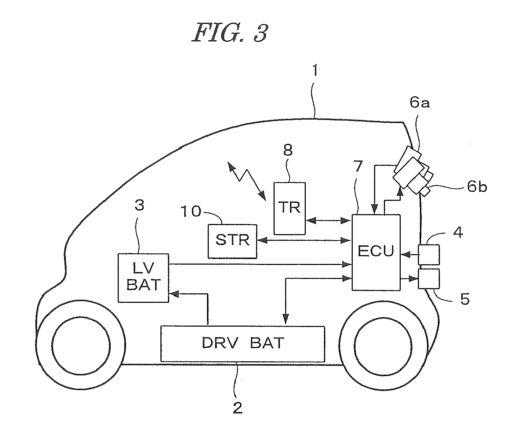

FIG. 3 shows a configuration of a battery system and a vehicle environment monitoring apparatus in this embodiment. In this embodiment, the vehicle 1 is provided with two cameras 6a and 6b, and an image storing device 10 for storing the images obtained by the cameras 6a and 6b. This embodiment is the same as the first embodiment except for the points described below.

In this embodiment, the first camera 6a corresponds to the camera 6 of the first embodiment, and the second camera 6b is directed to the charging connector 4. Accordingly, both of the images of environment of the charging equipment 21 and environment of the charging connector 4 are obtained, and the obtained images are stored in the image storing device 10.

The image data stored in the image storing device 10 can be checked by transmitting the data to the monitoring server 11 or displaying the images on an onboard display device.

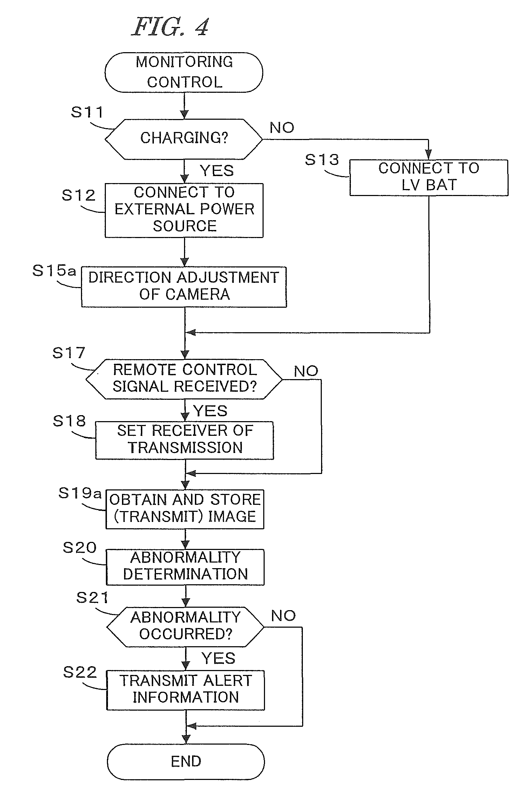

FIG. 4 is a flowchart of the environment monitoring control process in this embodiment. This process is obtained by deleting steps S14 and S16 of the flowchart shown in FIG. 2, and replaces steps S15 and S19 respectively with steps S15a and S19a. In this embodiment, steps S14 and S16 of FIG. 2 is unnecessary since the second camera 6b can obtain the image of environment of the charging connector 4 and the electric power supply connector 5.

In step S15a, required direction adjustment is performed with respect to only the first camera 6a. In step S19a, the images obtained by the two cameras 6a and 6b are respectively stored in the image storing device 10. Further, if the remote control signal is received from the mobile terminal device 12, transmitting the obtained images to the mobile terminal device 12 is also simultaneously performed.

In this embodiment, the storing process (and the transmitting process) is performed with respect to the images respectively obtained by the two cameras 6a and 6b. Accordingly, monitoring from two viewing directions with the two cameras 6a and 6b can be performed, thereby simplifying the viewing angle adjustment of the camera.

In this embodiment, the image storing device 10 corresponds to the onboard storing device, steps S11 - S13, S15a, and S19a of FIG. 4 correspond to the image obtaining means, and step S19a corresponds to the transmitting/storing process means.

The present invention is not limited to the embodiments described above, and various modifications may be made. For example, the vehicle 1 may be provided with the image storing device 10 in the first embodiment, and the ECU 7 may perform only storing the image obtained by the camera 6, or perform both of transmitting and storing the obtained image. Further, in the second embodiment, the ECU 7 may perform only transmitting the obtained image, or perform both of transmitting and storing the obtained image.

Further, in the first and second embodiments described above, the battery system has the electric power supply connector 5, i.e., the electric power supply function of supplying electric power to an external electric device. Alternatively, the battery system may not have the electric power supply function.

Further, the number of cameras may not be restricted to one or two, and may be three or more. Further, in the above-described embodiments, the ECU 7 performs the abnormality determination. Alternatively, the monitoring server 11 may perform the abnormality determination. Further, if abnormality is determined to have occurred, generating a warning sound and/or additionally transmitting the abnormality information to the security company which is previously determined. In addition, the user of the vehicle may perform the abnormality determination by viewing the obtained image.

Further, in the above-described embodiments, an electric vehicle is shown as the vehicle 1. The present invention is applicable also to a hybrid vehicle provided with the similar battery system. Further, in the above-described embodiments, the mobile terminal device 12 is shown as the information terminal device which transmits the remote control signal. A normal desktop personal computer to which the wireless-communicating function is added, can be used as the information terminal device. As for the hybrid vehicle, the charging connector for charging the onboard battery from the external charging equipment (charging function from the external charging equipment) is not necessarily required, and the present invention is applicable to a hybrid vehicle having only the electric power supply connector (electric power supply function for the external electric device).

Further, in the above-described embodiments, the vehicle provided only with the camera for obtaining a rearview image. As for a vehicle provided cameras mounted on door mirrors and/or the front portion of the vehicle, not only the camera for the rearview image but these cameras may be used as a camera for the above-described monitoring.

Further, if a vehicle is provided with a holder for mounting a mobile information terminal device, and data transmission can be performed between the mobile information terminal device mounted on the holder and the ECU 7 with the communication unit 8, the camera mounted on the mobile information terminal device may be used as a camera for the monitoring.

Further, in the above-described embodiments, an example in which the onboard camera is automatically directed to the external charging equipment 21 and/or the charging connector 4, is shown. Alternatively, the charging connector 4 and/or the electric power supply connector 5 may be disposed at a position to which the viewing direction of the onboard camera(s) (the camera for rearview image, the camera positioned at the front portion, the camera positioned at the door mirror, and/or the camera of the mobile information terminal device mounted on the holder) can be directed, so that the monitoring can be performed with the fixed viewing direction of the onboard camera(s).

Further, the method for determining abnormality of the charging equipment, the charging connector, and the like is not limited to the above described method. For example, if the vehicle is provided with the key recognizing means (means for determining whether or not the vehicle key exists in the vicinity of the vehicle) of the smart entry system, abnormality may be determined to have occurred when the cover of the charging connector (or the electric power supply connector) is opened or closed, or the charging cable is connected or disconnected in the state where the vehicle key does not exist in the vicinity of the vehicle.

Further, if the residual charged amount (SOC: State of Charge) of the low-voltage battery 3 becomes small when monitoring the electric power supply connector, charging of the low-voltage battery 3 may automatically be performed using electric power of the drive battery 2.
A vehicle environment monitoring apparatus mounted on a vehicle which is provided with a battery system and at least one onboard camera for obtaining an image of environment of the vehicle. The battery system includes an onboard battery and a charging connector, and is configured so that the onboard battery is capable of being charged via the charging connector from external charging equipment. An image of environment of the external charging equipment and/or an image of environment of the charging connector are/is obtained with the onboard camera(s), when the onboard battery is being charged from the external charging equipment. At least one of a transmitting process for transmitting the obtained image to an external apparatus, and a storing process for storing the obtained image in an onboard storing device, is performed.

## Claims

1. A vehicle environment monitoring apparatus mounted on a vehicle which is provided with a battery system and at least one onboard camera for obtaining an image of environment of said vehicle, said battery system including an onboard battery and a charging connector, and being configured so that said onboard battery is capable of being charged via said charging connector from external charging equipment, **characterized by** comprising:
image obtaining means for obtaining, with said at least one onboard camera, an image of environment of said external charging equipment and/or an image of environment of said charging connector, when said onboard battery is being charged from said external charging equipment; and
transmitting/storing process means for performing at least one of a transmitting process for transmitting the obtained image to an external apparatus, and a storing process for storing the obtained image in an onboard storing device.

2. The vehicle environment monitoring apparatus according to claim 1, wherein said at least one onboard camera is mounted so that the viewing direction thereof can be changed, and
said image obtaining means moves said at least one onboard camera so that the viewing direction thereof is directed to said external charging equipment and/or said charging connector, when charging the onboard battery from said external charging equipment.

3. The vehicle environment monitoring apparatus according to claim 1 or 2, wherein said vehicle is provided with a plurality of onboard cameras,
and said transmitting/storing means performs at least one of the transmitting process and the storing process with respect to the images respectively obtained by said plurality of onboard cameras.

4. The vehicle environment monitoring apparatus according to any one of claims 1 to 3, wherein said image obtaining means obtains an image of environment of said vehicle using electric power supplied from said onboard battery, when said vehicle is stopped and said external charging equipment is not connected to said charging connector, and
said transmitting/storing means performs at least one of the transmitting process and the storing process with respect to the obtained image.

5. The vehicle environment monitoring apparatus according to any one of claims 1 to 4, further comprising remote control means for receiving a remote operation signal from an information terminal device and performing a control operation based on the remote operation signal,
wherein said remote control means controls said transmitting/storing process means based on the remote operation signal to transmit the image obtained by said at least one onboard camera to the information terminal device.

6. The vehicle environment monitoring apparatus according to any one of claims 1 to 5, further comprising:
abnormality determining means for determining whether any abnormality occurs based on the image obtained by said at least one onboard camera; and
alert information outputting means for outputting alert information when said abnormality determining means determines that abnormality has occurred.

7. A vehicle environment monitoring apparatus mounted on a vehicle which is provided with a battery system including an onboard battery and an electric power supply connector, said onboard battery system being configured so as to be capable of supplying electric power via said electric power supply connector to an external electric device,
said vehicle environment monitoring apparatus including at least one onboard camera for obtaining an image of environment of said vehicle, **characterized by** further comprising:
image obtaining means for obtaining an image of environment of said electric power supply connector when said vehicle is stopped; and
transmitting/storing process means for performing at least one of a transmitting process for transmitting the obtained image to an external apparatus, and a storing process for storing the obtained image in an onboard storing device.
